# FASCICULE DE BREVET EUROPEEN

(11) **EP 1 986 893 B1**
(45) Date de publication et mention de la délivrance du brevet: **30.03.2011**
(21) Numéro de dépôt: 07731014.2
(22) Date de dépôt: 20.02.2007
(51) Int. Cl.: B60R 21/215

(54) **COUVERCLE DE COUSSIN GONFLABLE A RUPTURE FACILE**
LEICHTBRECHENDES AUFBLASBARES AIRBAGGEHÄUSE
EASILY-BREAKABLE INFLATABLE AIRBAG CASE

(30) Priorité: 22.02.2006 FR 0601555
(43) Date de publication de la demande: 05.11.2008
(73) Titulaire: Demo Injection, 60230 Chambly (FR)
(72) Inventeur: LOPES, Albert, FR-95390 Saint Leu la Foret (FR)
(74) Mandataire: Bezault, Jean
(86) Numéro de dépôt international: PCT/FR2007/000305
(87) Numéro de publication internationale: WO 2007/096516

(56) Documents cités:
- EP-A2- 1 393 990
- US-A1- 2004 140 652

## Description

L'invention concerne une paroi en matière thermoplastique moulée par injection, notamment un couvercle de coussin gonflable pour véhicule, propre à se rompre selon une ligne de faiblesse préétablie sous l'effet d'une force agissant sur une face de la paroi.

Un coussin gonflable de sécurité pour véhicule est habituellement contenu, avant utilisation, dans un espace limité par un couvercle en matière plastique moulé par injection. Lorsque le coussin est gonflé par un gaz sous l'effet d'une collision, il exerce une pression sur la face interne du couvercle, provoquant la rupture de celui-ci qui permet le déploiement du coussin dans l'habitacle du véhicule. Pour obtenir une rupture franche du couvercle, une ligne de faiblesse est classiquement aménagée sous la forme d'une réduction d'épaisseur localisée.

Une telle réduction d'épaisseur localisée implique une restriction du passage de matière lors de la réalisation du couvercle par injection, conduisant à des défauts d'aspect et à des contraintes dans la matière.

On connaît aussi, d'après US 2004/140652, une paroi du genre défini en introduction, dans laquelle la ligne de faiblesse est formée par la jonction, par injection, de deux nappes de matière définissant des parties respectives de l'étendue superficielle de la paroi.

L'invention vise notamment une paroi du genre défini dans US 2004/140652 et prévoit que lesdites nappes présentent dans leur zone de jonction des formes coopérantes produisant un verrouillage mécanique mutuel.

Des caractéristiques optionnelles de l'invention, complémentaires ou de substitution, sont énoncées ci-après:
- L'une au moins desdites nappes est constituée d'un mélange comprenant au moins un plastomère et au moins un élastomère.
- Ledit mélange comprend du polypropylène en tant que plastomère.
- Ledit mélange comprend en tant que plastomère un copolymère séquencé styrène-éthylène-butène-styrène.
- Ledit verrouillage mécanique mutuel est produit au voisinage d'une seule face de la paroi.
- Une première desdites nappes présente une nervure s'étendant sensiblement parallèlement aux faces de la paroi et à distance de celles-ci, emprisonnée entre deux régions de la seconde nappe qui sont reliées entre elles à travers au moins un trou traversant ménagé dans la nervure.
- La nervure présente un élargissement situé au-delà dudit trou par rapport à la partie restante de la première nappe.
- Ledit verrouillage mécanique mutuel est produit au voisinage de la face interne du couvercle de coussin gonflable.
- L'épaisseur de la paroi le long de la ligne de faiblesse est sensiblement égale à l'épaisseur de chacune des nappes au voisinage de leur zone de jonction.
- Les matières des deux nappes présentent un aspect différent, notamment une couleur différente.

L'invention a également pour objet un procédé pour réaliser une paroi telle que définie ci-dessus, comportant les étapes suivantes:
a) formation d'une première cavité de moulage par coopération d'une première partie de moule et d'une seconde partie de moule, et remplissage de la première cavité par injection de matière pour former une première nappe dans une première étape de moulage;
b) après refroidissement de la matière injectée, séparation des première et seconde parties de moule, la première nappe restant attachée à la première partie de moule;
c) formation d'une seconde cavité de moulage par coopération de la première partie de moule et d'une troisième partie de moule, ladite seconde cavité ayant sensiblement les dimensions de la paroi à réaliser et étant occupée sur une partie de son étendue superficielle et dans toute son épaisseur par la première nappe, et remplissage du volume restant de la seconde cavité par injection de matière pour former une seconde nappe dans une seconde étape de moulage.

Le procédé selon l'invention peut comporter au moins certaines des particularités suivantes:
- La première partie de moule comporte au moins un élément mobile qui fait saillie dans la première cavité de moulage lors de la première étape de moulage et qui est rétracté pour dégager la seconde cavité de moulage lors de la seconde étape de moulage.
- Ledit élément mobile est une broche coulissante dont l'extrémité définit une face de ladite nervure et vient en contact lors de la première étape de moulage avec un tenon de la seconde partie de moule qui ménage ledit trou traversant, un flanc de ladite broche délimitant le cas échéant ledit élargissement.
- Les matières sont injectées à une température comprise entre 180 et 240 °C environ.

Les caractéristiques et avantages de l'invention sont exposés plus en détail dans la description ci-après, avec référence aux dessins annexés.
La figure 1 est une vue de la face extérieure d'un couvercle de coussin gonflable pour véhicule selon l'invention.
La figure 2 est une vue en coupe selon la ligne II-II de la figure 1.
La figure 3 est une vue analogue à la figure 2 relative à un autre coussin gonflable selon l'invention.
Les figures 4 et 5 sont des vues partielles en coupe montrant deux étapes successives de la fabrication par injection du couvercle de la figure 3.
La figure 6 est une vue analogue à la figure 2 relative à un couvercle de l'état de la technique.

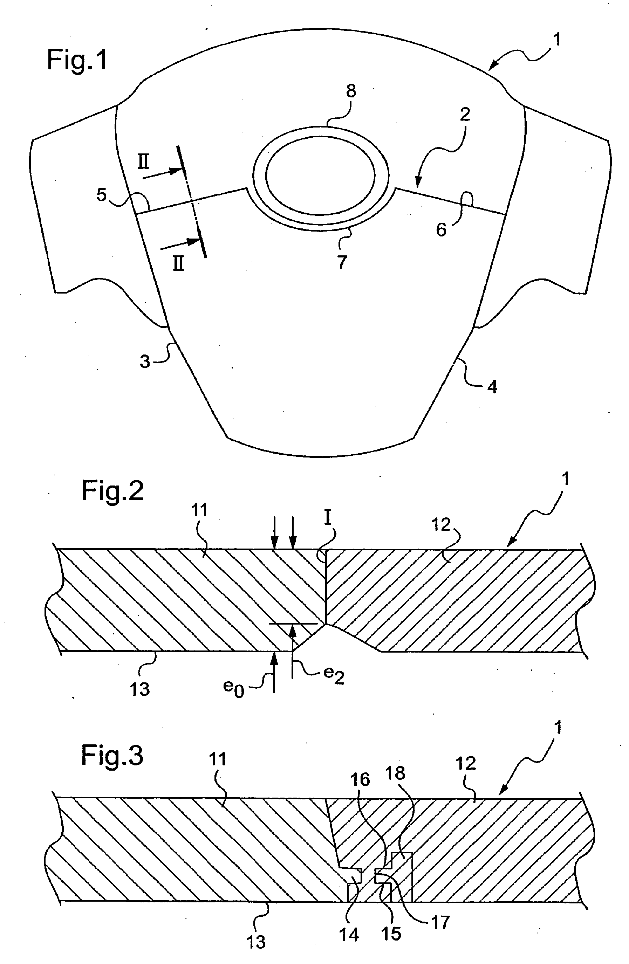

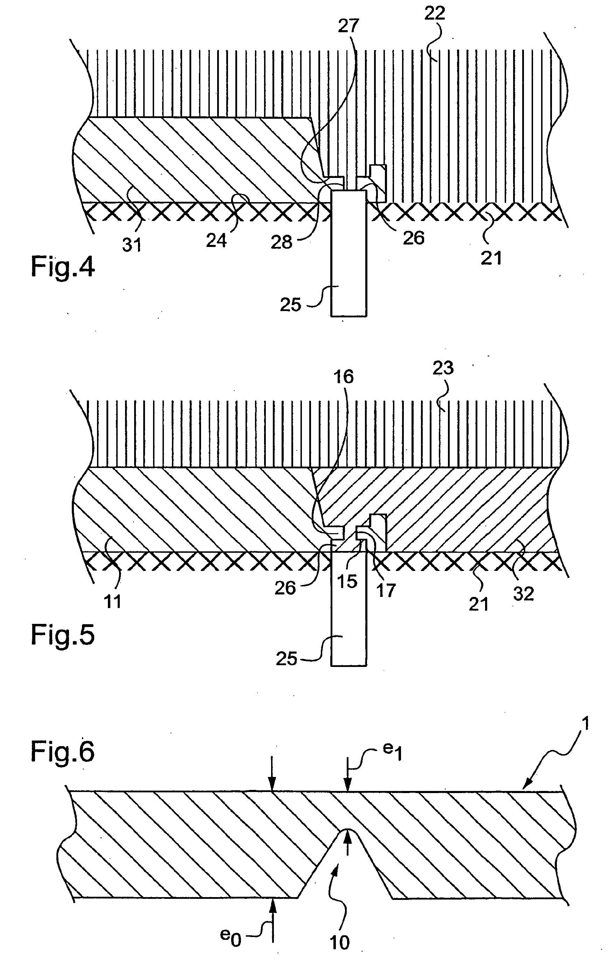

La figure 1 représente un couvercle de coussin gonflable 1 vu de l'extérieur, c'est-à-dire depuis l'habitacle du véhicule lorsqu'il est installé, cette vue correspondant aussi bien à un couvercle selon l'invention, comme représenté en coupe sur la figure 2 ou sur la figure 3, qu'à un couvercle de l'état de la technique comme représenté en coupe sur la figure 6.

Le couvercle 1 présente de façon connue une ligne de faiblesse 2, qui est représentée à titre illustratif par un trait mais peut n'être pas visible dans la réalité. Dans le cas présent, la ligne 2 s'étend de manière continue d'un bord gauche 3 à un bord droit 4 du couvercle, et est formée de deux segments de droites 5, 6 adjacents respectivement aux bords 3 et 4, raccordés entre eux par un arc 7 contournant un cartouche central 8 qui peut porter des marques d'identification de l'appareil.

La figure 6 illustre la manière classique de réaliser la ligne de faiblesse 2, sous la forme d'une zone d'épaisseur réduite 10, avec les inconvénients exposés plus haut.

Selon l'invention, la ligne de faiblesse est réalisée par la jonction de deux nappes de matière 11 et 12 injectées séparément. Les matières des nappes 11 et 12 viennent ainsi se coller mutuellement en une interface I.

La rupture du couvercle lors du gonflage du coussin s'effectue alors par la séparation des deux nappes le long de l'interface I, et non plus par déchirement au sein d'une nappe unique.

Sur la figure 2, l'épaisseur minimale du couvercle le long de la ligne de faiblesse 2 correspond à l'épaisseur e₂ sur laquelle s'étend l'interface I, qui est peu inférieure à l'épaisseur totale e₀ du couvercle, contrairement au couvercle de la figure 6 pour lequel l'épaisseur minimale e₁ est petite par rapport à l'épaisseur totale e₀. Néanmoins, la rupture peut être obtenue pour une même force exercée par le coussin, ou même par une force inférieure, grâce à l'adhérence mutuelle limitée des deux nappes. La force de rupture peut être réglée en agissant sur le degré de compatibilité des matières des deux nappes, qui peuvent être identiques ou différentes, et sur l'épaisseur minimale dans la zone de jonction, qui peut aller jusqu'à l'épaisseur maximale e₀ du couvercle.

Avantageusement, comme connu en soi, l'une au moins desdites nappes et de préférence les deux, sont constituées d'un mélange comprenant au moins un plastomère et au moins un élastomère, ces termes désignant des polymères organiques, solides à température ordinaire, dont la déformation sous contrainte est principalement plastique et élastique respectivement.

Comme exemples de plastomères, on peut citer notamment le polypropylène (PP), ou bien un copolymère séquencé styrène-éthylène-butène-styrène (SEBS).

Comme exemples d'élastomères, on peut citer notamment les élastomères thermoplastiques (TPE), les élastomères thermoplastiques sur base styrénique (TPE'S), les élastomères thermoplastiques oléfiniques (TPO), les élastomères thermoplastiques vulcanisés (TPV) et les élastomères polyuréthanne (TPU).

Les mélanges utilisés sont avantageusement des "compounds" présentant des propriétés élastomères et plastomères comme par exemple un compound élastomère sur polypropylène - styrène-éthylène-butène-styrène (PP SEBS), ou encore un compound polypropylène - éthylène-propylène-diène monomère (PP/EPDM).

Les deux nappes peuvent être constituées d'un même mélange, par exemple compound PP SEBS / compound PP SEBS ou de deux mélanges différents, par exemple compound PP SEBS / compound PP EPDM.

Le couvercle de la figure 3 diffère de celui de la figure 2 en ce que son épaisseur est uniforme, par conséquent sans aucune diminution dans la zone de jonction de nappes, et en ce que les nappes 11 et 12 présentent dans leur zone de jonction des formes particulières produisant un verrouillage mécanique mutuel. Plus spécifiquement, la nappe 11 présente au voisinage de la face intérieure 13 du couvercle une nervure 14 possédant deux faces planes 15, 16 parallèles au plan de la face 13. Des trous 17 répartis le long de la ligne de faiblesse traversent la nervure de la face 15 à la face 16. Au-delà des trous 17 par rapport à la partie principale de la nappe 11, la nervure présente une zone marginale élargie 18 qui s'étend au-delà de la face 15 jusqu'à la face 13, et au-delà de la face 16, sur une épaisseur totale inférieure à la moitié de l'épaisseur du couvercle. La nervure 14, à l'exception de la zone 18, est emprisonnée entre deux zones de la nappe 12 reliées entre elles à travers les trous 17, réalisant ainsi un verrouillage mutuel des nappes qui augmente la force à exercer de l'extérieur pour rompre le couvercle, réduisant le risque d'une rupture accidentelle.

On décrit maintenant le procédé de fabrication du couvercle de la figure 3, à l'aide des figures 4 et 5.

Sur la figure 4, une première partie de moule 21 et une seconde partie de moule 22 délimitent entre elles une première cavité de moulage qui est remplie, lors d'une première étape de moulage, par une matière injectée 31 formant la première nappe 11. La partie 21 présente une face plane 24 destinée à définir la face intérieure 13 du couvercle, à partir de laquelle fait saillie une broche mobile 25 qui peut coulisser par rapport à la partie 21 perpendiculairement au plan de la face 24, cette direction de coulissement correspondant également à la direction d'ouverture/fermeture du moule d'injection. L'extrémité 26 de la broche 25 définit la face 15 de la nervure 14, dont la face opposée 16 est définie par un bossage 27 de la partie de moule 22, au-delà duquel font saillie des tétons 28 qui viennent en appui sur l'extrémité 26 et qui définissent les trous 17 traversant la nervure. La zone élargie 18 de la nervure est partiellement délimitée par des flancs de la broche 25 et du bossage 27.

Après refroidissement de la matière 31, la partie de moule 22 est retirée, la première nappe 11 restant attachée à la partie de moule 21, et une troisième partie de moule 23 vient coopérer avec la partie 21 pour former une nouvelle cavité de moule plus grande que la cavité précédente, qui est occupée sur une partie de son étendue superficielle et dans toute son épaisseur par la première nappe 11, le volume restant de cette cavité étant alors rempli par injection d'une matière 32 définissant la seconde nappe 12. Pendant cette seconde étape de moulage, la broche 25 est rétractée de telle sorte que son extrémité 26 se situe dans le plan de la face 24 de la partie 21, permettant à la matière 32 de traverser les trous 17 de la nervure 16 pour remplir le volume compris entre la face 15 de la nervure et l'extrémité 26 de la broche.

Outre les avantages mentionnés précédemment, l'invention permet, par le choix des matières constitutives des deux nappes, de conférer à celles-ci un aspect différent, notamment une couleur différente, par exemple dans un but ornemental, sans avoir recours à un traitement ultérieur. Des nappes présentant ainsi une couleur différente peuvent être recouvertes d'un vernis incolore.

## Revendications

1. Paroi (1) en matière thermoplastique moulée par injection, notamment couvercle de coussin gonflable pour véhicule, propre à se rompre selon une ligne de faiblesse préétablie (2) sous l'effet d'une force agissant sur une face (13) de la paroi, dans laquelle la ligne de faiblesse est formée par la jonction (I), par injection, de deux nappes de matière (11, 12) définissant des parties respectives de l'étendue superficielle de la paroi, **caractérisée en ce que** lesdites nappes présentent dans leur zone de jonction des formes coopérantes (14-18) produisant un verrouillage mécanique mutuel.

2. Paroi selon la revendication 1, dans laquelle l'une au moins desdites nappes est constituée d'un mélange comprenant au moins un plastomère et au moins un élastomère.

3. Paroi selon la revendication 2, dans laquelle ledit mélange comprend du polypropylène en tant que plastomère.

4. Paroi selon l'une des revendications 2 et 3, dans laquelle ledit mélange comprend en tant que plastomère un copolymère séquencé styrène-éthylène-butène-styrène.

5. Paroi selon l'une des revendications précédentes, dans laquelle ledit verrouillage mécanique mutuel est produit au voisinage d'une seule face (13) de la paroi.

6. Paroi selon l'une des revendications précédentes, dans laquelle une première desdites nappes présente une nervure (14) s'étendant sensiblement parallèlement aux faces (13) de la paroi et à distance de celles-ci, emprisonnée entre deux régions de la seconde nappe qui sont reliées entre elles à travers au moins un trou traversant (17) ménagé dans la nervure.

7. Paroi selon la revendication 6, dans laquelle la nervure (14) présente un élargissement (18) situé au-delà dudit trou (17) par rapport à la partie restante de la première nappe (11).

8. Couvercle de coussin gonflable pour véhicule selon l'une des revendications 5 à 7, dans lequel ledit verrouillage mécanique mutuel est produit au voisinage de la face interne (13) du couvercle.

9. Paroi selon l'une des revendications précédentes, dans laquelle l'épaisseur (e₂) de la paroi le long de la ligne de faiblesse est sensiblement égale à l'épaisseur (e₀) de chacune des nappes (11, 12) au voisinage de leur zone de jonction.

10. Paroi selon l'une des revendications précédentes, dans laquelle les matières des deux nappes présentent un aspect différent, notamment une couleur différente.

11. Procédé pour réaliser une paroi selon l'une des revendications précédentes, comportant les étapes suivantes:
a) formation d'une première cavité de moulage par coopération d'une première partie de moule (21) et d'une seconde partie de moule (22), et remplissage de la première cavité par injection de matière (31) pour former une première nappe (11) dans une première étape de moulage;
b) après refroidissement de la matière injectée (31), séparation des première et seconde parties de moule, la première nappe (11) restant attachée à la première partie de moule (21) ;
c) formation d'une seconde cavité de moulage par coopération de la première partie de moule (21) et d'une troisième partie de moule (23), ladite seconde cavité ayant sensiblement les dimensions de la paroi à réaliser et étant occupée sur une partie de son étendue superficielle et dans toute son épaisseur par la première nappe (11), et remplissage du volume restant de la seconde cavité par injection de matière (32) pour former une seconde nappe (12) dans une seconde étape de moulage.

12. Procédé selon la revendication 11 pour réaliser une paroi selon l'une des revendications 1 à 5, dans lequel la première partie de moule (21) comporte au moins un élément mobile (25) qui fait saillie dans la première cavité de moulage lors de la première étape de moulage et qui est rétracté pour dégager la seconde cavité de moulage lors de la seconde étape de moulage.

13. Procédé selon la revendication 11 pour réaliser une paroi selon l'une des revendications 6 et 7, dans lequel ledit élément mobile est une broche coulissante (25) dont l'extrémité (26) définit une face (15) de ladite nervure (14) et vient en contact lors de la première étape de moulage avec un tenon (28) de la seconde partie de moule (22) qui ménage ledit trou traversant (17), un flanc de ladite broche délimitant le cas échéant ledit élargissement (18).

14. Procédé selon l'une des revendications 11 et 12, dans lequel les matières sont injectées à une température comprise entre 180 et 240 °C environ.

## Claims

1. Wall (1) of injection moulded thermoplastic material, in particular a cover of an inflatable air bag for vehicles, designed to rupture along a predetermined line of weakness (2) under the effect of a force acting on a face (13) of the wall, wherein the line of weakness is formed by the junction (I), by injection, of two layers of material (11, 12) defining respective parts of the surface area of the wall, **characterised in that** the said layers exhibit in their junction zone co-operating shapes (14-18) producing a mechanical interlocking effect.

2. Wall according to claim 1, in which at least one of the said layers consists of a mixture comprising at least one plastomer and at least one elastomer.

3. Wall according to claim 2, in which the said mixture comprises polypropylene as the plastomer.

4. Wall according to one of claims 2 and 3, in which the said mixture comprises a styrene-ethylene-butene-styrene copolymer sequence as the plastomer.

5. Wall according to one of the preceding claims, in which the said mechanical interlocking is produced in the vicinity of just one face (13) of the wall.

6. Wall according to one of the preceding claims, in which a first of the said layers has a rib (14) extending substantially parallel to the faces (13) of the wall and at a distance therefrom, enclosed between two regions of the second layer that are connected to one another via at least one through hole (17) provided in the rib.

7. Wall according to claim 6, in which the rib (14) has an enlargement (18) situated beyond the said hole (17) with respect to the remaining part of the first layer (11).

8. Inflatable air bag cover for a vehicle according to one of claims 5 to 7, in which the said mechanical interlocking is produced in the vicinity of the internal surface (13) of the cover.

9. Wall according to one of the preceding claims, in which the thickness (e₂) of the wall along the line of weakness is substantially equal to the thickness (e₀) of each of the layers (11, 12) in the vicinity of their junction zone.

10. Wall according to one of the preceding claims, in which the materials of the two layers have a different appearance, in particular a different colour.

11. Process for producing a wall according to one of the preceding claims, comprising the following steps:
a) formation of a first moulding cavity by co-operation of a first mould part (21) and a second mould part (22), and filling of the first cavity by injection of material (31) so as to form a first layer (11) in a first moulding step;
b) after cooling of the injected material (31), separation of the first and second mould parts, the first layer (11) remaining attached to the first mould part (21);
c) formation of a second moulding cavity by co-operation of the first mould part (21) and a third mould part (23), the said second cavity having substantially the dimensions of the wall to be formed and being occupied over part of its surface area and over its whole thickness by the first layer (11), and filling of the remaining volume of the second cavity by injection of material (32) so as to form a second layer (12) in a second moulding step.

12. Process according to claim 11 for producing a wall according to one of claims 1 to 5, in which the first mould part (21) comprises at least one movable element (25) that projects into the first moulding cavity during the first moulding step and which is withdrawn so as to free the second moulding cavity during the second moulding step.

13. Process according to claim 11 for producing a wall according to one of claims 6 and 7, in which the said movable element is a sliding pin (25), the end (26) of which defines a surface (15) of the said rib (14) and comes into contact during the first moulding step with a stud (28) of the second mould part (22) that contains the said through hole (17), a side face of the said pin delimiting if necessary the said enlargement (18).

14. Process according to one of claims 11 and 12, in which the materials are injected at a temperature between about 180°C and 240°C.

## Patentansprüche

1. Wand (1) aus thermoplastischem Material, geformt durch Spritzgießen, insbesondere Deckel für aufblasbare Airbag-Kissen für Fahrzeuge, die in der Lage ist, entlang einer vorgefertigten Schwächungslinie (2) unter der Einwirkung einer Kraft aufzureißen, die auf eine Seite (13) der Wand wirkt, bei der die Schwächungslinie gebildet wird durch die Verbindung (I), durch Einspritzen von zwei Materialbahnen (11, 12) die entsprechende Abschnitte der Oberflächenerstreckung der Wand bilden, **dadurch gekennzeichnet, dass** die genannten Bahnen in ihrer Verbindungszone zusammenwirkende Formen (14-18) aufweisen, die eine gegenseitige mechanische Verriegelung erzeugen.

2. Wand nach Anspruch 1, bei der wenigstens eine der Bahnen aus einer Mischung gebildet ist, die wenigstens ein Plastomer und wenigstens ein Elastomer aufweist.

3. Wand nach Anspruch 2, bei der die Mischung als Plastomer Polypropylen aufweist.

4. Wand nach Anspruch 2 oder 3, bei der die Mischung als Plastomer ein Copolymer der Sequenz Styren-Ethylen-Buten-Styren aufweist.

5. Wand nach einem der vorhergehenden Ansprüche, bei der die gegenseitige mechanische Verriegelung in der Nähe einer einzigen Seite (13) der Wand erzeugt ist.

6. Wand nach einem der vorhergehenden Ansprüche, bei der eine erste der Bahnen eine Rippe (14) aufweist, die sich im Wesentlichen parallel zu den Seiten (13) der Wand und im Abstand von dieser erstrecken, eingefangen zwischen zwei Abschnitten der zweiten Bahn, die untereinander über wenigstens eine Queröffnung (17) verbunden sind, die in der Rippe ausgebildet ist.

7. Wand nach Anspruch 6, bei der die Rippe (14) eine Aufweitung (18) aufweist, die über die Öffnung (17) hinaus bezüglich des verbleibenden Abschnitts der ersten Bahn (11) angeordnet ist.

8. Deckel für Fahrzeugairbags nach einem der Ansprüche 5 bis 7, bei dem die mechanische gegenseitige Verriegelung in der Nähe der Innenseite (13) des Deckels erzeugt ist.

9. Wand nach einem der vorhergehenden Ansprüche, bei der die Dicke (e₂) der Wand entlang der Schwächungslinie im Wesentlichen gleich der Dicke (e₀) einer jeden der Bahnen (11, 12) in der Nähe ihrer Verbindungszone ist.

10. Wand nach einem der vorhergehenden Ansprüche, bei der die Materialien der beiden Bahnen unterschiedliches Aussehen, insbesondere eine unterschiedliche Farbe haben.

11. Verfahren zur Herstellung einer Wand nach einem der vorhergehenden Ansprüche, das die folgenden Schritte aufweist:
a) Bilden eines ersten Formhohlraums durch Zusammenwirken eines ersten Formabschnitts (21) und eines zweiten Formabschnitts (22), und Füllen des ersten Hohlraums durch Einspritzen von Material (31) um eine erste Bahn (11) in einem ersten Formungssschritt zu bilden;
b) nach Abkühlen des eingespritzten Materials (31), Trennen des ersten von dem zweiten Formabschnitt, wobei die erste Bahn (11) an dem ersten Formabschnitt (21) haften bleibt;
c) Bilden eines zweiten Formhohlraums durch Zusammenwirken des ersten Formabschnitts (21) und eines dritten Formabschnitts (23), wobei der zweite Hohlraum im Wesentlichen die Abmessungen der herzustellenden Wand aufweist und über einen Bereich von seiner oberflächlichen Erstreckung und über seine gesamte Dicke durch die erste Bahn (11) bedeckt ist, und Füllen des verbleibenden Volumens des zweiten Hohlraums durch Einspritzen von Material (32), um eine zweite Bahn (12) in einem zweiten Formungsschritt zu bilden.

12. Verfahren nach Anspruch 11 zur Erzeugung einer Wand nach einem der Ansprüche 1 bis 5, bei dem der erste Formabschnitt (21) wenigstens ein bewegliches Element (25) aufweist, das in den ersten Formhohlraum bei dem ersten Formungsschritt vorspringt und das zurückgezogen wird, um den zweiten Formhohlraum bei dem zweiten Formungsschritt freizugeben.

13. Verfahren nach Anspruch 11 zur Erzeugung einer Wand nach Anspruch 6 oder 7, bei dem das bewegliche Element ein gleitender Stift (25) ist, dessen Ende (26) eine Seite (15) der Rippe (14) definiert, und bei dem ersten Formungsschritt mit einem Zapfen (28) des zweiten Formungsabschnitts (22) in Kontakt kommt, der die Queröffnung (17) ausbildet, wobei eine Flanke des Stiftes gegebenenfalls die Aufweitung (18) begrenzt.

14. Verfahren nach Anspruch 11 oder 12, bei dem die Materialien bei einer Temperatur zwischen ca. 180 und 240 °C eingespritzt werden.
